**Europäisches Patentamt**

**European Patent Office**

**Office européen des brevets**

(11) Veröffentlichungsnummer: **0 363 694**
**A2**

(19)

(12) ## EUROPÄISCHE PATENTANMELDUNG

(21) Anmeldenummer: **89117348.6**

(22) Anmeldetag: **20.09.89**

(51) Int. Cl.⁵: **G11B 15/675**

(30) Priorität: **13.10.88 DE 3834809**

(43) Veröffentlichungstag der Anmeldung:
**18.04.90 Patentblatt 90/16**

(84) Benannte Vertragsstaaten:
**CH DE FR GB IT LI SE**

(71) Anmelder: **ROBERT BOSCH GMBH**
**Postfach 10 60 50**
**D-7000 Stuttgart 10(DE)**

(72) Erfinder: **Arndt, Rudolf**
**Feldstrasse 17**
**D-3207 Harsum(DE)**
Erfinder: **Felten, Gerold**
**Hainholz 52**
**D-3202 Bad Salzdetfurth(DE)**
Erfinder: **Repper, Wilfried**
**Brehmhof 18**
**D-3000 Hannover 1(DE)**
Erfinder: **Kottutz, Wolfgang**
**Beethovenstrasse 61**
**D-3300 Braunschweig(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Vorrichtung zum Einführen einer Magnetbandkassette in einem Magnetbandgerät.**

(57) Bei einer Vorrichtung zum Einführen einer Magnetbandkassette in einem Magnetbandgerät mit Längseinschub ist der die Kassette einziehende Kassettenmitnebmer derart ausgebildet, daß die Kassette während der Einzugsphase, unter Ausnutzung der möglichen Toleranz, seitlich zur Tonwelle hin in eine Randlage ausgelenkt wird, so daß das Tonband beim Absenken der Kassette sicher zwischen Tonwelle und Andruckrolle gefügt wird.

Fig. 1

## Vorrichtung zum Einführen einer Magnetbandkassette in einem Magnetbandgerät

Die Erfindung betrifft eine Vorrichtung zum Einführen einer Magnetbandkassette in einem Magnetbandgerät mit Längseinschub gemäß dem Oberbegriff nach Anspruch 1.

Eine derartige Vorrichtung ist beispielsweise aus der DE 33 12 136 C1 bekannt.

Bei derartigen Vorrichtungen erfolgt das Einziehen der Kassette üblicherweise mittels eines in Einschubrichtung verschiebbar geführten Kassettenmitnehmers, der mit einem symmetrisch ausgebildeten Vorsprung mittig in der Wickelöffnung der Kassette angreift. Die so vorgefügte Kassette wird nach dem Einziehen mit dem Kassettenlift in ihre Arbeitslage abgesenkt und dort mittels zweier Zentrierstifte gefügt und zudem fixiert.

Da die auf dem Markt befindlichen Kassetten jedoch relativ große Toleranzschwankungen in ihren Abmessungen aufweisen, kann dieses für sich allein oder in Verbindung mit Toleranzen des Magnetbandgerätes dazu führen, daß bei ungünstiger Toleranzlage das Magnetband beim Absenken der Kassette nicht zwischen Tonwelle und Andruckrolle gefügt wird, sondern hinter der Tonwelle zu liegen kommt. In diesem Fall ist die gewünschte Funktion nicht gegeben und somit eine Wiedergabe nicht möglich.

Der Erfindung liegt die Aufgabe zugrunde, eine Vorrichtung zum Einführen einer Magnetbandkassette in einem Magnetbandgerät mit Längseinschub derart auszubilden, daß auch bei ungünstiger Toleranzlage das Magnetband sicher zwischen Tonwelle und Andruckrolle gefügt wird.

Diese Aufgabe wird erfindungsgemäß durch die kennzeichnenden Merkmale des Anspruchs 1 gelöst.

Die mit der Erfindung erzielten Vorteile bestehen insbesondere darin, daß die Funktionssicherheit des Tonbandgerätes wesentlich verbessert wird und daß die Anforderungen an die Toleranzen der Kassette und/oder des Gerätes verringert werden können.

Durch die in den Unteransprüchen aufgeführten Maßnahmen sind vorteilhafte Ausgestaltungen der Vorrichtung nach Anspruch 1 möglich.

Ein Ausführungsbeispiel der Erfindung ist in der Zeichnung dargestellt und wird im folgenden näher beschrieben.

Es zeigen:

Figur 1 eine schematisch vereinfachte Draufsicht eines Magnetbandkassettengerätes mit einer Einzugsvorrichtung und mit einer teilweise eingeführten Kassette,

Figur 2 eine schematisch vereinfachte Draufsicht der Vorrichtung mit einer eingezogenen, aber noch nicht abgesenkten Kassette,

Figur 3 die Vorderansicht,

Figur 4 die Unteransicht und

Figur 5 eine Seitenansicht eines Kassettenmitnehmers in vergrößerter Darstellung.

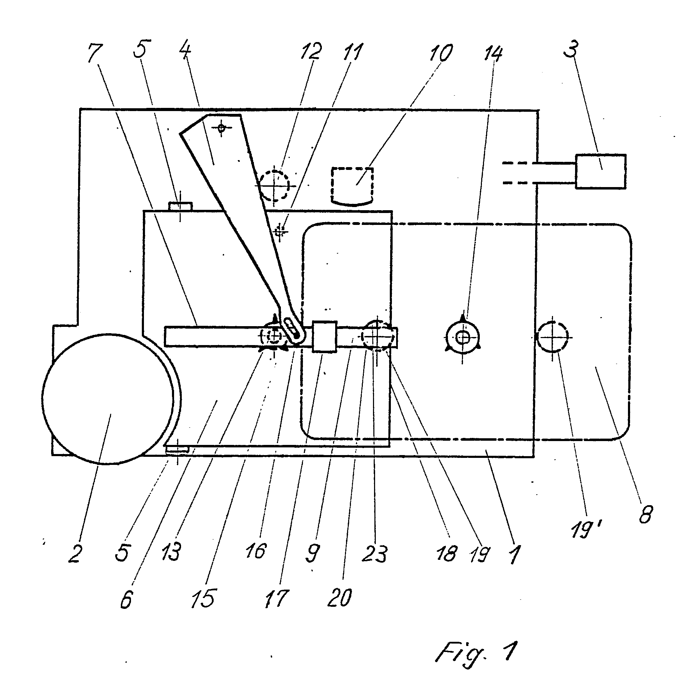

Das in Figur 1 dargestellte Magnetbandkassettengerät weist in bekannter Weise ein Chassis 1, einen Motor 2, eine Auswurftaste 3, einen Hebel 4, einen um eine Schwenkachse 5 schwenkbaren Kassettenlift 6, einen in einem Führungsschlitz 7 des Kassettenliftes 6 in Einschubrichtung der Magnetbandkassette 8 verschiebbar gelagerten Kassettenmitnehmer 9, einen Magnetkopf 10, eine Tonwelle 11, eine Andruckrolle 12 und Wickelkerne 13, 14 auf. Der Hebel 4 ist über einen Schlitz 15 und über einen Stift 16 mit dem Kassettenmitnehmer 9, der mit einem Führungsteil 17 versehen ist, gekuppelt. Der Kassettenmitnehmer 9 ist an seinem der Liftöffnung 18 zugewandten Ende mit einem unter einer Vorspannung in eine Wickelöffnung 19 greifenden Vorsprung 20 versehen.

Wird nun die Kassette 8 über die in der Figur 1 dargestellte Stellung hinaus weiter eingeschoben, so bewegt die zuerst eingeführte Fläche der Kassette 8 über einen angeformten Anschlag in bekannter Weise den Kassettenmitnehmer 9 und damit den Hebel 4. Eine bekannte, nicht näher dargestellte Mechanik zieht nun über den Hebel 4, den Kassettenmitnehmer 9 und dessen in die Wickelöffnung 19 greifenden Vorsprung 20 die Kassette automatisch ein. Nach dem Einzug wird sie in bekannter Weise mit dem Kassettenlift 6 abgesenkt und in ihrer Arbeitslage gefügt.

Bei einer derartigen Vorrichtung greift der Vorsprung 20 des Kassettenmitnehmers 9 beim Einziehen üblicherweise in der Mitte der Wickelöffnung 19 an. Das hat zur Folge, daß sich die Kassette beim Einziehvorgang immer nach dem Kassettenmitnehmer 9 ausrichtet. Greift der Kassettenmitnehmer 9 jedoch mittig in der Wickelöffnung 19 an, entfernt sich bei ungünstiger Toleranzlage das Tonband von seiner Fügeposition. Dabei kann sich ergeben, daß das Tonband nicht zwischen Tonwelle 11 und Andruckrolle 12 gefügt wird, sondern hinter der Tonwelle 11 zu liegen kommt. Versuche haben gezeigt, daß das Ausrichten der Kassette 8 nach dem Kassettenmitnehmer 9 so stark ist, daß auch eine in diesem Bereich chassisseitig angebrachte Andruckkraft ein falsches Fügen nicht verhindern kann. Sie kann so gar, wenn sie zu stark wird, den Einziehvorgang be- und verhindern.

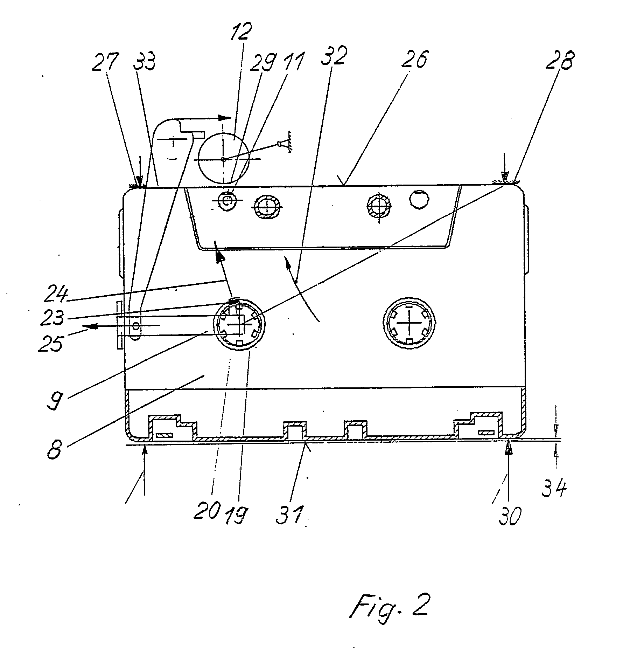

Hier nun setzt die Erfindung ein, die durch die Figur 2 verdeutlicht wird. Dabei ist der Kassettenmitnehmer 9 durch eine an seinen Vorsprung 20 an der der Tonwelle 11 zugewandten Seite angeformten Ansatz 23 so gestaltet, daß die Komponente 24 der Einzugskraft 25 die Kassette 8 mit der Bandöffnungsseite 26 immer an die Anlageseite 27/28 des Gerätechassis drückt, die das richtige Fügen des Bandes 29 begünstigt. Durch das Andrücken der Kassette 8 kommt es bandöffnungsseitig immer zu einer Berührung zwischen der Kassette 8 und der Anlageseite 27/28 des Chassis, so daß sich Toleranzen nicht nachteilig auswirken können.

Beim Einführen wird die Kassette 8 von Hand so weit in das Laufwerk eingeschoben, bis der Kassettenmitnehmer 9 in die Wickelöffnung 19 einfedert und die Kassette 8 durch eine aus dem Laufwerk wirkende Einzugskraft 25 in den Kassettenlift 6 hineingezogen wird. Bei diesem Vorgang richtet sich die Kassette 8 nach der auf sie wirkenden Komponente 24 der Einziehkraft 25 aus. Im vorderen Bereich reicht eine Federkraft 30 eines Führungsteils im Laufwerk auf die Rückseite 31 der Kassette 8 aus, die Kassette 8 mit der Bandöffnungsseite gegen die Chassisanlageseiten 27/28 zu drücken. Der Vorsprung 20 des Kassettenmitnehmers 9 ist mit seinem Ansatz 23 so ausgebildet, daß die auf die Kassette 8 wirkende Komponente 24 der Einzugskraft 25 immer ein Rechtsdrehmoment 32 auf die Kassette 8 ausübt und sie im hinteren Bereich 33 an die Chassisanlageseite 27 drückt. Bei vorhandenen Maßunterschieden 34 zwischen Kassette 8 und Fügeöffnung wird die Kassette 8 trotzdem mit ihrer Bandfügeseite 26 gegen die Chassisanlageseite 27/28 gedrückt, wodurch das Magnetband 29 so weit wie möglich nach rechts zu liegen kommt. Beim anschließenden Absenken der Kassette 8 mit dem Kassettenlift 6 ist es jetzt bei normaler Lage des Bandes 29 in der Kassette 8 nicht möglich, das Band 29 in unerwünschter Weise hinter der Tonwelle 11 abzusenken. Da die Kassette 8 beim Einziehen immer mit der Bandfügeseite 26 gegen die Anlageseite 27/28 im Chassis gedrückt wird, ist ein Fehlfügen bei normaler Lage des Bandes 29 nicht möglich.

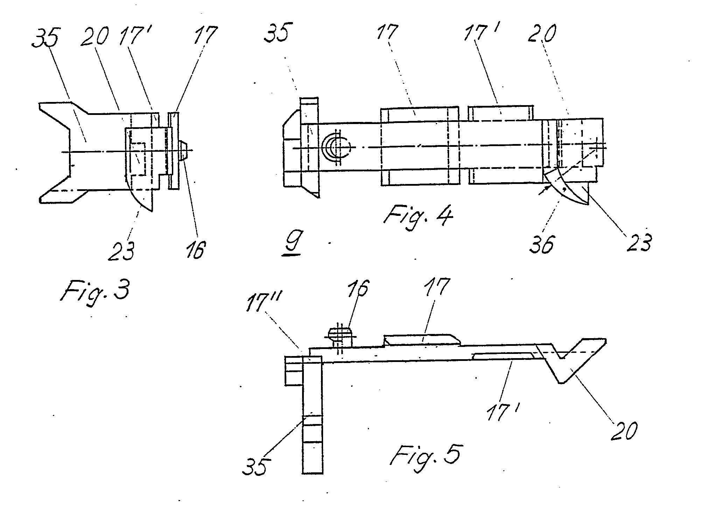

Der in den Figuren 3, 4 und 5 in drei Ansichten ausführlich dargestellte, aus elastischem Kunststoff in Spritztechnik hergestellte Kassettenmitnehmer 9 ist mit daran angeformten Führungsteilen 17, 17', 17" versehen, mit denen er im Führungsschlitz 7 verschiebbar gelagert ist. Er weist ferner einen angeformten Anschlag 35 für die Kassette 8 sowie den Stift 16 für den Hebel 4 auf. Der in die Wickelöffnung 19 der Kassette 8 eingreifende Vorsprung 20 weist an seiner der Tonwelle 11 zugewandten Seite den Ansatz 23 auf, der sich zur Kassette 8 hin verjüngt und dessen dem Anlagepunkt der Wickelöffnung 19 zugeordnete, halbsichelförmig ausgebildete Berührungsfläche 36 den Krümmungsradius der Wickelöffnung 19 angepaßt ist.

**Ansprüche**

1. Vorrichtung zum Einführen einer Magnetbandkassette in einem Magnetbandgerät mit Längseinschub und mit einem in einem Führungsschlitz des Kassettenliftes in Einschubrichtung verschiebbar geführten Kassettenmitnehmer, der einen Vorsprung aufweist, welcher beim Einführen der Kassette in eine Wickelöffnung der Kassette einfedert und die Kassette danach automatisch einzieht,
dadurch gekennzeichnet,
daß der in die Wickelöffnung (19) eingreifende Vorsprung (20) derart ausgebildet ist, daß er die Vorzentrierung der Kassette (8) dahingehend beeinflußt, daß die Kassette (8) während der Einzugsphase, unter Ausnutzung der möglichen Toleranz, seitlich zur Tonwelle (11) hin in eine Randlage ausgelenkt wird.

2. Vorrichtung nach Anspruch 1,
dadurch gekennzeichnet,
daß der in die Wickelöffnung (19) eingreifende Vorsprung (20) an seiner der Tonwelle (11) zugewandten Seite einen Ansatz (23) aufweist, der an den ihm zugeordneten Anlagepunkt der Wickelöffnung (19) außermittig zur Einzugsrichtung anliegt.

3. Vorrichtung nach Anspruch 2,
dadurch gekennzeichnet,
daß der an dem Vorsprung (20) angeformte Ansatz (23) sich zur Kassette (8) hin verjüngt und daß seine dem Anlagepunkt der Wickelöffnung (19) zugeordnete Berührungsfläche (36) dem Krümmungsradius der Wickelöffnung (19) angepaßt und halbsichelförmig ausgebildet ist.

Fig. 1

Fig. 2

Fig. 3

g    Fig. 4

Fig. 5